# EUROPÄISCHE PATENTSCHRIFT

(11) **EP 2 686 286 B1**
(45) Veröffentlichungstag und Bekanntmachung des Hinweises auf die Patenterteilung: **28.10.2015**
(21) Anmeldenummer: 12757185.9
(22) Anmeldetag: 15.03.2012
(51) Int. Cl.: C04B 33/32, C04B 35/638, B22F 3/22

(54) **VERFAHREN ZUR HERSTELLUNG VON METALLISCHEN ODER KERAMISCHEN FORMKÖRPERN**
PROCESS FOR PRODUCING METALLIC OR CERAMIC MOULDED BODIES
PROCÉDÉ DE FABRICATION DE CORPS MOULÉS MÉTALLIQUES OU CÉRAMIQUES

(30) Priorität: 16.03.2011 EP 11158473
(43) Veröffentlichungstag der Anmeldung: 22.01.2014
(73) Patentinhaber: BASF SE, 67056 Ludwigshafen (DE)
(72) Erfinder: TER MAAT, Johan, 68163 Mannheim (DE); BLÖMACHER, Martin, 67149 Meckenheim (DE); WOHLFROMM, Hans, 68163 Mannheim (DE)
(86) Internationale Anmeldenummer: PCT/IB2012/051237
(87) Internationale Veröffentlichungsnummer: WO 2012/123913

(56) Entgegenhaltungen:
- EP-A2- 0 444 475
- US-A- 5 059 388
- US-A- 5 604 919
- US-A1- 2009 288 739

## Beschreibung

Die vorliegende Erfindung betrifft ein Verfahren zur Herstellung von metallischen oder keramischen Formkörpern aus thermoplastischen Formmassen enthaltend pulverförmige Metalle, pulverförmige Metalllegierungen oder pulverförmige Keramiken und organische Bindemittel.

Metallische bzw. keramische Formkörper können durch Spritzgießen, Extrudieren oder Verpressen von thermoplastischen Massen hergestellt werden, die neben Metallpulvern und/oder Keramikpulvern ein organisches Bindemittel aufweisen. Es handelt sich um hochgefüllte organische Polymerformmassen. Nach dem Formen der thermoplastischen Masse zu einem Grünteil wird das organische Bindemittel entfernt und das erhaltene entbinderte Grünteil (= Braunteil) wird gesintert.

Die ersten Bindemittel für das Pulverspritzgussverfahren basierten im Allgemeinen auf Mischungen von Polyethylen oder Polypropylen und Wachs. Dabei wird der Grünkörper durch Ausschmelzen zunächst vom Wachs befreit und der Restbinder durch eine langsame Pyrolyse ausgebrannt. Für das Ausschmelzen müssen die Grünteil in einem Pulverbett eingelagert werden, weil die Grünfestigkeit durch das Schmelzen praktisch nicht gegeben ist. Spätere Bindersysteme für die thermische Entbinderung verzichten auf das Ausschmelzen, weil das aufwändige Einbetten der Grünteile in Pulver und nachfolgende Ausgraben viel zu zeitaufwendig sind.

Üblicherweise besteht ein verbessertes Bindersystem für die vollständige thermische Entbinderung aus mehreren Komponenten, wie z.B. in DE 1992 5197 beschrieben. Diese Komponenten werden sukzessive beim Aufheizen bei unterschiedlichen Temperaturen aus dem Formkörper freigesetzt, so dass der üblicherweise geringere Binderbestandteil noch bis mindestens 400°C vorhanden ist und als Restbinder gesehen werden kann. Eine rein thermische Entbinderung dauert 1 bis 3 Tage und ist somit extrem langsam.

Ein noch weiter verbessertes Verfahren stellt die Lösemittelentbinderung dar, bei welcher Bindemittelsysteme, welche Binderkomponenten unterschiedlicher Löslichkeit enthalten, eingesetzt werden. Zur Entbinderung des Grünteils wird zunächst eine Binderkomponente durch Lösungsmittelextraktion entfernt, wonach die verbleibende, nicht oder sehr schlecht in dem Lösungsmittel lösliche Restbinderkomponente wiederum durch eine langsame thermische Zersetzung aus dem Formteil entfernt wird (z.B. US 4,197,118 oder EP 501 602). Dabei wird der Schmelzebereich des Restbinders durchschritten und eine plastische Verformung des Pulverformteils ist dadurch unumgänglich.

WO 2011/016718 A1 beschreibt ein Pulverspritzgussverfahren, bei welchem eine Bindermischung aus einem Polymer wie z.B. POM und einem nicht polymeren Lösungsmittel (Molmasse < 300 g/mol, Schmelzpunkt > RT) für das Polymer eingesetzt wird. Dabei wird zunächst das vorgenannte Lösungsmittel herausgelöst oder aber verdampft. Das verbleibende Polymer wird durch eine thermische Entbinderung entfernt. Von Nachteil bei diesem Verfahren ist, dass solche Binder beim Mischen mit Pulver und bei der Verarbeitung auf der Spritzgießmaschine bereits das nicht polymere Lösungsmittel verdampfen. Die niedermolekulare Komponente wird an der Grünteiloberfläche ausgeschwitzt und verschmutzt die Spritzgießform. Darüber hinaus ist die Grünteilfestigkeit deutlich verringert.

R.M. German schreibt in seinem Handbuch "Powder Injection Molding", MPIF 1990, Kapitel 4, Seite 115, über die Lösemittelentbinderung:
"The two constituents in the binder are often present in roughly equal proportions. This allows each to remain interconnected throughout the pore structure between the particles. The binder interconnectivity can be easily maintained with as little as 30 volume percent of either constituent. Successful binder formulations therefore contain 70 to 30 % by volume of a major component."

Ein weiteres Verfahren zur Entbinderung des Grünteils gemäß dem Stand der Technik beruht auf einer katalytischen Entbinderung durch Behandlung des Grünteils in einer gasförmigen, säurehaltigen Atmosphäre bei erhöhter Temperatur. EP-A 0 413 231 offenbart beispielsweise ein Verfahren zur Herstellung eines anorganischen Sinterformteils, bei welchem ein Gemisch aus einem sinterbaren anorganischen Pulver und Polyoxymethylen als Bindemittel zu einem Grünkörper verformt wird und das Bindemittel dann durch Behandeln des Grünkörpers in einer gasförmigen, säurehaltigen z.B. Bortrifluorid oder HNO₃, enthaltenden Atmosphäre entfernt wird. Anschließend wird der so behandelte Grünkörper versintert. Beispiele für sinterförmige Pulver sind sowohl oxidische Keramikpulver wie Al₂O₃, ZrO₂, Y₂O₃ als auch nicht-oxidische Keramikpulver wie SiC, Si₃N₄, und Metallpulver.

Mit einer ausschließlich aus POM bestehenden Binderphase werden jedoch in der Praxis keine zufriedenstellenden Ergebnisse erhalten, da die Sinterdichten zu niedrig sind.

EP-A 0 444 475 beschreibt für keramische Formkörper geeignete Binderzusammensetzungen, die neben Polyoxymethylen als zusätzliches lösliches Polymerisat Poly-1,3-Dioxolan, Poly-1,3-Dioxan oder Poly-1,3-Dioxepan enthalten oder als in POM dispergierbares Polymerisat aliphatische Polyurethane, aliphatische Polyepoxide, Poly(C₂-C₆-alkylenoxide), aliphatische Polyamide oder Polyacrylate oder deren Mischungen enthalten.

In der EP 0 465 940 A1 und DE 100 19 447 A1 werden thermoplastische Formmassen für die Herstellung metallischer Formkörper beschrieben, die neben einem sinterbaren pulverförmigen Metall oder einer pulverförmigen Metalllegierung eine Mischung aus Polyoxymethylenhomo- oder copolymerisaten und einem damit nicht mischbaren Polymerisat als Bindemittel enthalten. Als zusätzliches Polymerisat kommen Polyolefine, insbesondere Polyethylen und Polypropylen, wie auch Polymerisate von Methacrylsäureestern wie PMMA, in Betracht (EP 0 465 940 A1). DE 100 19 447 A1 beschreibt Bindemittel für anorganische Materialpulver zur Herstellung metallischer und keramischer Formkörper, wobei diese Bindemittel eine Mischung aus Polyoxymethylenhomo- oder copolymerisaten und einem Polymersystem aus Polytetrahydrofuran und mindestens einem Polymer aus C₂₋₈-Olefinen, vinylaromatischen Monomeren, Vinylestern aliphatischer C₁₋₈-Carbonsäuren, Vinyl-C₁₋₈-Alkylethern oder C₁₋₁₂-Alkyl(meth)acrylaten enthalten.

WO 2008/006776 A1 beschreibt Bindemittel für anorganische Materialpulver zur Herstellung metallischer Formkörper, wobei diese Bindemittel eine Mischung aus Polyoxymethylenhomo- oder copolymerisaten und einem Polymersystem aus C₂₋₈-Olefinen und Poly-1,3-Dioxepan oder Poly-1,3-Dioxolan sind.

Die Entbinderung der Grünteile erfolgt bei Verwendung der vorgenannten POM-Bindemittelsysteme katalytisch durch Behandlung des Grünteils in einer gasförmigen, säurehaltigen Atmosphäre von z.B. Halogenwasserstoffen, Ameisensäure oder Salpetersäure bei erhöhter Temperatur. Dabei werden die Polyoxymethylenhomo- oder Copolymerisate rückstandsfrei depolymerisiert, gefolgt von einer langsamen thermischen Restentbinderung des zurückbleibenden Polymerisats. Auch hier wird der Schmelzebereich des Restbinders durchschritten und eine plastische Verformung des Pulverformteils ist dadurch unumgänglich. Der Restbindergehalt beträgt bei der katalytischen Entfernung im Allgemeinen etwa 10 %. Wegen des geringeren Restbindergehaltes ist die plastische Verformung üblicherweise weniger ausgeprägt als bei der Lösemittelentbinderung, wo der Restbinderanteil üblicherweise 30 bis 70 % beträgt.

Bei reaktiven Pulveroberflächen können bei der katalytischen Entbinderung mit den vorgenannten Säuren, insbesondere mit Salpetersäure, Probleme durch eine Reaktion der Säure mit der Oberfläche auftreten. Diese Reaktion kann so stark ausgeprägt sein, dass die Entbinderung durch Porenverstopfung nach wenigen zehntel Millimetern Eindringtiefe zum Erliegen kommt. Beispielsweise ist die HNO₃-Entbinderung bei Kupfer und kupferhaltigen Legierungen nicht, oder, bei geringem Cu-Gehalt, nur eingeschränkt möglich, weil die voluminösen Nitrate den Zugang zum Formteilinneren blockieren. Ein ähnliches Verhalten ist von Kobalt bekannt.

Aber auch bei anderen Metallen, wo eine Reaktion mit HNO₃ nicht offensichtlich ist und die Entbinderung völlig normal verläuft, können erfahrungsgemäß doch Probleme auftreten. In diesen Fällen findet möglicherweise nur eine oberflächliche Reaktion statt und die Entbinderungsgeschwindigkeit wird kaum merklich oder gar nicht negativ beeinflusst. Dennoch ist im Sinterprodukt eine Zunahme im Sauerstoffgehalt wie z.B. bei Titan, oder bei kohlenstoffhaltigen Legierungen, z.B. von Eisen, ein Verlust von Kohlenstoff durch die Reaktion zu gasförmigen Kohlenoxiden festzustellen.

Weitere Beispiele von Pulvern, bei welchen nicht direkt offensichtlich Reaktionen mit HNO₃ auftreten, sind W, V, Mg, Mn und Keramikpulver wie AIN und Si₃N₄. Insbesondere bei Legierungen, welche reaktive Metalle enthalten, z.B. AI- und/oder Ti-haltige Superlegierungen wie IN713C, MAR 246, GMR 235 und IN 100, sind solche oberflächliche Reaktionen für den Fortschritt der Entbinderung nicht störend, aber die daraus resultierenden AI- und Ti-haltigen Oxidschichten sind im weiteren Verlauf des Sinterschrittes nicht mehr reduzierbar und diese Legierungselemente stehen dann für die Legierungsbildung nicht oder nur teilweise zur Verfügung; die Werkstoffeigenschaften des Sinterproduktes sind schlechter oder sogar unbrauchbar.

Eine katalytische Entbinderung mit Oxalsäure wird, auch für oxidationsempfindliche Sintermaterialien wie WC/Co und Cu, in der WO 94/25205 beschrieben. Die katalytische Entbinderung mit Oxalsäure ist im direkten Vergleich mit HNO₃ jedoch deutlich langsamer und Oxalsäure ist als Feststoff problematisch in der Dosierung, so dass sie bisher nicht zum industriellen Einsatz gekommen ist.

Sämtliche vorhandene Literatur der letzten 30 Jahre über Pulverspritzguss legt also dar, dass das organische Bindemittel aus mehreren Komponenten bestehen muss; in der Regel sind das mindestens zwei Komponenten, von dem eine Komponente in einem ersten Entbinderungsschritt entfernt wird und eine zweite Komponente als Restbinder im Formteil verbleibt.

Die Funktion und Wichtigkeit dieses Restbinders, dieses sogenannte "Backbone", wird damit erklärt, dass das "Backbone" für eine Grundfestigkeit im Braunteil Sorge tragen muss, um den Transport der Braunteile (beispielsweise zu Kontrollmessungen, oder vom Entbinderöfen in den Sinterofen) zu ermöglichen. Zudem soll der Restbinder während des frühen Stadiums des Sinterprozesses die Unversehrtheit der Formteile garantieren, denn üblicherweise setzen die Diffusionsprozesse, welche zunächst zu Kontaktbildung zwischen den Pulverpartikeln und später zu Verdichtung führen, erst bei ca. 600 - 1000°C ein. Unterhalb dieser Temperatur entspräche ein entbindertes Formteil ohne Restbinder einer reinen Packung von Pulverpartikeln, quasi einer Sandburg, also ohne jegliche Festigkeit.

R.M. German schreibt in seinem Handbuch "Powder Injection Molding", MPIF 1990, Kapitel 4, Seite 99: "The binder is a temporary vehicle for homogeneously packing the powder into the desired shape and then holding the particles in that shape until the beginning of sintering."

Der Gehalt des Restbinders variiert von ca. 10 bis maximal 70 Gew -% der Binderphase, wobei der Gehalt abhängig von der gewählten primären Entbinderungsmethode und dem Polymertyp ist.

Der Restbinder wird gemäß dem Stand der Technik ausnahmslos durch thermische Zersetzung entfernt. Die Temperatur bei welcher der Restbinder das Braunteil verlässt, ist abhängig vom gewählten Polymer und von der Wahl des Ofenschutzgases, liegt aber üblicherweise im Temperaturbereich 300 bis 600°C, insbesondere 400 bis 500°C.

Nachteilig an der üblichen thermischen Restentbinderung ist, dass diese eine zusätzliche Quelle für unerwünschte reaktive Substanzen ist. Während der thermischen Restentbinderung werden Polymerketten üblicherweise gecrackt und in kürzere Ketten aufgespalten. Dabei entsteht bei vielen Polymeren Kohlenstoff als Nebenprodukt und dieser Kohlenstoff ist sehr fein verteilt und reaktiv. Dieser reaktive Kohlenstoff kann wiederum von den reaktiven Metallen oder Legierungselementen gebunden werden und weitere unerwünschte Zweitphasen (Carbide) bilden.

Der Restbinder ist weiterhin von erheblichem Nachteil für den Betrieb des Sinterofen, bei dessen Aufheizrate immer die thermische Zersetzung des Restbinders berücksichtigt werden muss und oftmals Probleme mit der Beherrschung des Kohlenstoffgehaltes durch ein Verkohlen des Restbinders bestehen.

Der Sinterofen muss demnach eine besondere Aufgabe erfüllen in einem Temperaturbereich (300 bis 600°C), wo der Ofen nicht gut zu regeln ist; die Sinteröfen sind von der Leistungsabgabe her für den Hochtemperaturbereich oberhalb von 1200°C gebaut. Da Sinteröfen, insbesondere Batch-Sinteröfen für MIM, wegen des verwendeten Molybdän sehr teuer sind, wäre es ein wichtiger Kostenvorteil, keine Rücksicht auf die thermische Zersetzung nehmen zu müssen. Durch die ohne Restbinder mögliche, höhere Aufheizrate könnte sich die Zykluszeit um 20 bis 40 % reduzieren.

Von Nachteil ist weiterhin, dass der Sinterofen durch Zersetzungsprodukte des Restbinders belastet wird, die durch aufwändige Konstruktionen aus dem Ofen herausgeführt werden und zumeist auskondensiert werden müssen, wodurch erhebliche Wartungsarbeiten bedingt sind.

Es besteht somit die Aufgabe ein verbessertes Verfahren zur Herstellung von metallischen oder keramischen Formkörpern zu entwickeln, welches es ermöglicht ein im Wesentlichen restbinderfreies Formteil bereitzustellen, das ohne die vorgenannten Einschränkungen gesintert werden kann und auch für reaktive Pulver geeignet ist.

Die Aufgabe wird dadurch gelöst, dass die Entbinderung in zwei Schritten erfolgt, wobei in einem ersten Entbinderungsschritt ein erster Binderanteil mit einem Lösungsmittel aus den Grünteilen herausgelöst wird und in einem zweiten Entbinderungsschritt der verbleibende Binderanteil säurekatalytisch entfernt wird.

Gegenstand der Erfindung ist ein Verfahren zur Herstellung eines metallischen oder keramischen Formkörpers aus einer thermoplastischen Masse, enthaltend
A) 40 bis 65 Vol.%, mindestens eines anorganischen sinterbaren Pulvers A
B) 35 bis 60 Vol.% einer Mischung aus
   B₁) 50 bis 95 Gew.-% eines oder mehrerer Polyoxymethylenhomo- oder -copolymerisate;
   B₂) 5 bis 50 Gew-% eines in B₁) homogen gelösten oder mit einer mittleren Teilchengröße von weniger als 1 µm in B₁) dispergierten Polymerisats,
      als Bindemittel, und
C) 0 bis 5 Vol.-% eines Dispergierhilfsmittels,
   wobei die Summe der Komponenten A), B) und C) 100 Vol.-% ergibt,
   durch Spritzgießen oder Extrusion zu einem Formteil, Entfernen des Bindemittels und Sintern, dadurch gekennzeichnet, dass
   zum Entfernen des Bindemittels
   a) das Formteil mit einem Lösungsmittel behandelt wird, welches die Bindemittelkomponente B₂) aus dem Formteil extrahiert und in welchem die Bindemittelkomponente B₁) unlöslich ist,
   b) dann das Lösungsmittel durch Trocknen aus dem Formteil entfernt wird, und
   c) anschließend das Formteil in einer säurehaltigen Atmosphäre behandelt wird, welches die Bindemittelkomponente B1 aus dem Formkörper entfernt, und wobei die Säurebehandlung solange durchgeführt wird bis der Restbinderanteil in dem Formteil weniger als 0,5 Gew.-% beträgt.

Die Polyoxymethylenhomo- oder copolymerisate (POM) sind als solche bekannt und handelsüblich. Die Homopolymeren werden üblicherweise durch Polymerisation von Formaldehyd oder Trioxan hergestellt, vorzugsweise in der Gegenwart von geeigneten Katalysatoren. Im Rahmen der Erfindung bevorzugte Polyoxymethylencopolymere enthalten ebenfalls Trioxan und andere cyclische oder lineare Formalen bzw. sonstigen Formaldehyd-Quellen als Hauptmonomere. Die Bezeichnung Hauptmonomere soll ausdrücken, dass der Anteil dieser Monomere an der Gesamtmonomermenge, also der Summe von Haupt- und Comonomeren, größer ist als der Anteil der Comonomere an der Gesamtmonomermenge. Ganz allgemein weisen derartige POM-Polymere mindestens 50 mol-% an wiederkehrenden Einheiten -CH₂O- in der Polymerhauptkette auf. Geeignete Polyoxymethylencopolymere werden in der EP-A 0 446 708 (Seite 3, Zeilen 39 bis Seite 4, Zeile 31) beschrieben.

Der Anteil der Komponente B₁) beträgt bevorzugt 50 bis 95 Gew.-%, besonders bevorzugt 70 bis 90 Gew.-%, bezogen auf die Gesamtmenge des Bindemittels B).

Der Anteil der Komponente B₂) beträgt bevorzugt 5 bis 50 Gew-%, besonders bevorzugt 10 bis 30 Gew-%, bezogen auf die Gesamtmenge des Bindemittels B).

Als Komponente B₂) eignen sich grundsätzlich Polymerisate, die in Polyoxymethylenhomo- oder copolymerisaten B₁) homogen löslich oder darin in der geforderten Teilchengröße dispergierbar sind.

Bevorzugte Polymerisate B₂) dieser Art sind Polyolefine, aliphatische Polyurethane, aliphatische unvernetzte Polyepoxide, Polyether, aliphatische Polyamide und Polyacrylate sowie deren Mischungen. Die vorgenannten bevorzugten Polymerisate B₂) werden ebenfalls in der EP-A 0 446 708 (Seite 4, Zeile 34 bis Seite 7, Zeile 12) beschrieben.

Besonders bevorzugt. unter den vorgenannten Polymerisaten B₂) sind Polyether, insbesondere Poly-(C₂-C₆)-alkylenoxide, wie Polyethylenoxid (PEO), Polypropylenoxid, Poly-1,3-Dioxepan (PDP), Poly-1,3-Dioxolan und Polytetrahydrofuran oder deren Mischungen, vorzugsweise mit mittleren Molekulargewichten (Gewichtsmittelwert) im Bereich von 600 bis 50 000 g/mol, besonders bevorzugt 2000 bis 30 000, ganz besonders bevorzugt 5000 bis 20 000 g/mol. Entsprechende Produkte sind im Handel erhältlich oder die entsprechenden Herstellungsverfahren sind dem Fachmann bekannt, so dass sich hier nähere Angaben erübrigen. Es können auch Mischungen von verschiedenen Polyethern und/oder Polyethern verschiedener Molekulargewichte eingesetzt werden.

Das anorganische sinterbare Pulver A kann aus allen bekannten geeigneten anorganischen sinterbaren Pulvern, insbesondere auch reaktiven und/oder oxidationsempfindlichen Pulvern, ausgewählt werden. Vorzugsweise ist es ausgewählt aus Metallpulvern, Metalllegierungspulvern, Metallcarbonylpulvern, keramischen Pulvern und Gemischen davon, wobei metallische Pulver besonders bevorzugt sind.

Als Metalle, die in Pulverform vorliegen können, seien beispielsweise Aluminium, Eisen, insbesondere Carbonyleisenpulver, Chrom, Cobalt, Kupfer, Nickel, Silizium, Titan, Wolfram und Vertreter der Seltenen Erden wie Nd, Sm und Y genannt. Als pulverförmige Metalllegierungen sind beispielsweise hoch oder niedrig legierte Stähle sowie Metalllegierungen auf der Basis von Aluminium, Eisen, Titan, Kupfer, Nickel, Wolfram oder Kobalt zu nennen. Dabei können sowohl Pulver von bereits fertigen Legierungen als auch Pulvermischungen der einzelnen Legierungsbestandteile eingesetzt werden. Die Metallpulver, Metalllegierungspulver und Metallcarbonylpulver können auch im Gemisch eingesetzt werden. Geeignete anorganische Pulver sind ferner oxidische Keramikpulver wie Al₂O₃, ZrO₂, Y₂O₃ aber auch nicht-oxidische Keramikpulver wie SiC, Si₃N₄, und komplexere Oxidpulver, wie NiZnFe₂O₄, sowie anorganische Farbpigmente, wie CoAl₂O₄. Unter den reaktiven und oxidationsempfindlichen Pulvern sind insbesondere solche von Kupfer, Kobalt, Ti, W, V, Mg, Mn, Nd, Sm, Y und deren Legierungen, Keramikpulver wie AIN und Si₃N₄ und Legierungen von Aluminium und/oder Titan, sogenannte Superlegierungen wie IN713C, MAR 246, GMR 235 und IN 100 und die aus der Magnettechnik bekannten Legierungen mit den Hauptbestandteilen Nd-Fe-B und Sm-Co zu nennen.

Die Korngrößen der Pulver betragen vorzugsweise 0,1 bis 50 µm, besonders bevorzugt 0,3 bis 30 µm. Die Metallpulver, Metalllegierungspulver, Metallcarbonylpulver, keramische Pulver können auch im Gemisch eingesetzt werden.

Das als Komponente C) gegebenenfalls vorliegende Dispergierhilfsmittel kann aus bekannten Dispergierhilfsmitteln ausgewählt sein. Beispiele sind oligomeres Polyethylenoxid mit einem mittleren Molekulargewicht von 200 bis 600, Stearinsäure, Stearinsäureamid, Hydroxystearinsäure, Fettalkohole, Fettalkoholsulfonate und Blockcopolymere von Ethylen- und Propylenoxid, sowie Polyisobutylen. Besonders bevorzugt wird das Dispergierhilfsmittel in einer Menge von 1 bis 5 Vol-%, bezogen auf die Komponenten A), B) und C), eingesetzt.

Zusätzlich können die thermoplastischen Massen auch übliche Zusatzstoffe und Verarbeitungshilfsmittel, die die rheologischen Eigenschaften der Mischungen bei der Formgebung günstig beeinflussen, enthalten.

Die Herstellung der bei dem erfindungsgemäßen Verfahren eingesetzten thermoplastischen Masse kann auf übliche Weise in einem Kneter oder Extruder bei Temperaturen von 150 bis 200°C erfolgen (vgl. EP-A-0413231). Nach Abkühlen der Masse kann diese granuliert werden. Gemäß einer bevorzugten Ausführungsform kann die Herstellung der zu verformenden thermoplastischen Masse durch Aufschmelzen der Komponenten B) und Einmischen der Komponenten A) und gegebenenfalls C) erfolgen. Beispielsweise kann die Komponente B) in einem Zweischneckenextruder bei Temperaturen von vorzugsweise 150 bis 220°C, insbesondere 170 bis 200°C aufgeschmolzen werden. Die Komponente A) wird anschließend bei Temperaturen im gleichen Bereich in der erforderlichen Menge zu dem Schmelzestrom der Komponente B) dosiert. Vorteilhafterweise enthält die Komponente A) auf der Oberfläche das oder die Dispergierhilfsmittel C). Die Herstellung der thermoplastischen Massen kann aber auch durch Aufschmelzen der Komponenten B) und C) in Gegenwart der Komponente A) bei Temperaturen von 150 bis 220°C erfolgen.

Für die Formgebung der thermoplastischen Formmasse durch Spritzguss können die üblichen Schnecken- und Kolbenspritzgussmaschinen eingesetzt werden. Die Formgebung erfolgt im Allgemeinen bei Temperaturen von 175 bis 200°C und Drücken von 3.000 bis 20.000 kPa in Formen, die eine Temperatur von 60 bis 140°C aufweisen.

Die entformten Grünlinge werden dann nach dem erfindungsgemäßen Verfahren gemäß Schritt a) mit einem Lösungsmittel behandelt. Dabei richtet sich die Wahl des Lösungsmittels nach der chemischen Natur der Bindemittelkomponente B₂). Es werden im Folgenden nur beispielhaft Lösemittel für einige Bindemittelkomponenten B₂) angegeben; die Lösemittel für andere Bindemittelkomponenten B₂) sollten dem Fachmann bekannt sein. Auch Mischungen geeigneter Lösemittel können verwendet werden.

Polyolefine werden vorzugsweise in apolaren Lösemitteln wie beispielsweise Pentan, Hexan, Cyclohexan, Octan oder Waschbenzin gelöst, ferner auch in aromatischen Lösemitteln wie Benzol.

Polyacrylate (z.B PMMA) und Polyamide sind im Allgemeinen in den folgenden Lösemitteln löslich: Ethern wie Diethylether oder Tetrahydrofuran, Ketonen wie Methylethylketon oder Aceton, Estern wie Butyrolacton und C₁-C₄-Alkoholen wie Ethanol.

Polyether wie Polytetrahydrofuran, Poly-1,3-Dioxepan, Poly-1,3-Dioxolan, Polyethylenoxid oder Polypropylenoxid können beispielsweise gelöst werden in Lösemitteln wie Tetrahydrofuran oder Aceton und in C₁-C₆- Alkoholen wie Ethanol und Isopropanol; Polyethylenoxid könnte darüber hinaus in Wasser gelöst werden.

Falls Wasser als Lösemittel für die Bindemittelkomponente B₂) verwendet werden kann, wird es besonders bevorzugt, da Wasser wegen der Nichtbrennbarkeit eine noch viel einfachere und umweltverträglichere Handhabung ermöglicht.

Für reaktive und/oder oxidationsempfindliche Sinterpulver A wird bei Verwendung von Wasser als Lösemittel diesem vorzugsweise ein üblicher Korrosionsinhibitor, beispielsweise modifizierte Phosphonate wie Amino-tris(methylenphosphonsäure), Hydroxyethylamino-di(methylenphosphonsäure) oder Phosphonobutan-1,2,4-tricarbonsäure, erhältlich z.B. von der Fa. Zschimmer & Schwarz, hinzugefügt.

Äußerst reaktive Sinterpulver A werden vorzugsweise mit aprotischen organischen Lösemitteln, wie Ether, Ester, Amide oder Ketone, z.B. Tetrahydrofuran, Diethylether, Butyrolacton, Dimethylformamid, Methylethylketon oder vorzugsweise Aceton, behandelt.

Die Behandlung des Formteils mit einem Lösungsmittel gemäß Schritt a) des erfindungsgemäßen Verfahrens kann in handelsüblichen Anlagen mit geschlossenem Lösemittelkreislauf für die Reinigung von bearbeiteten, mit Schmiermittel verunreinigten Werkstücken durchgeführt werden, beispielhaft beschrieben in DE-A 4337129. Vorzugsweise um den Lösungsprozess zu beschleunigen erfolgt Schritt a) bei erhöhter Temperatur, d,h. einer Temperatur oberhalb Raumtemperatur bis zur Siedetemperatur des Lösemittels, insbesondere bei einer Temperatur von 40 bis 120°C. Besonders bevorzugt erfolgt Schritt a) bei Siedetemperatur des Lösungsmittels unter Rückfluss.

Die als Bindemittelkomponente B₁) bzw. Zweitbinder für Schritt a) des erfindungsgemäßen Verfahrens eingesetzten Polyoxymethylenhomo-und copolymere (POM) sind bis 120°C gegen praktisch alle gängigen Lösemittel resistent und garantieren auch bei höheren Temperaturen bis 120°C immer noch eine sehr hohe Festigkeit.

Es ist von Vorteil, wenn in Schritt a) des erfindungsgemäßen Verfahrens bei der Extraktion ein großer Konzentrationsunterschied zwischen der löslichen Binderkomponente B2) im Formteil und dem Lösungsmittel besteht. Letzteres kann man dadurch erreichen, dass man das beladene Lösungsmittel häufig durch frisches Lösungsmittel austauscht und/oder das gelöste Extrakt schnell beispielsweise durch eine Umwälzung von der Oberfläche des Extraktionsgutes weggeführt wird.

Die Behandlung mit einem Lösungsmittel gemäß Schritt a) des erfindungsgemäßen Verfahrens wird vorzugsweise so lange durchgeführt, bis die Bindemittelkomponente B₂) mindestens zu 75 %, vorzugsweise zu 85 %, besonders bevorzugt zu 90 %, aus dem Formteil entfernt ist. Dieser Zustand wird im Allgemeinen nach 4 bis 30 Stunden erreicht. Die erforderliche Behandlungsdauer hängt von der Behandlungstemperatur, von der Güte des Lösungsmittels für die Bindemittelkomponente B₂, vom Molekulargewicht der Komponente B₂, wie auch von der Größe des Formkörpers ab.

Nach der Extraktion müssen die Grünteile, welche nun porös und mit Lösungsmittel gesättigt sind, noch gemäß Schritt b) des erfindungsgemäßen Verfahrens getrocknet werden. Die Trocknung geschieht auf herkömmliche Weise, beispielsweise mit Hilfe eines Vakuumtrockenofens oder eines Wärmeschranks. Die Trocknungstemperatur orientiert sich nach der Siedetemperatur des Lösungsmittels, ist aber etwas niedriger zu wählen, um das Risiko eines schlagartigen oder zu schnellen Trocknungsvorgangs mit möglichen negativen Folgen für die Qualität des Grünteils zu vermeiden. Üblicherweise ist die Trocknung in 0,5 bis 8 h abgeschlossen.

Die Säurebehandlung in Schritt c) des erfindungsgemäßen Verfahrens erfolgt vorzugsweise bei Temperaturen im Bereich von 80 bis 180°C über einen Zeitraum von bevorzugt 0,1 bis 24 Stunden, besonders bevorzugt 0,5 bis 12 Stunden. Die erforderliche Behandlungsdauer hängt von der Behandlungstemperatur, der Konzentration und des Typs der Säure in der Behandlungsatmosphäre wie auch von der Größe des Formkörpers ab. Unter den üblichen Bedingungen resultiert im Allgemeinen eine Säurekonzentration von ca. 4 bis 5 Vol-% in der Atmosphäre (i.a. Stickstoff). Um die katalytische Entbinderung besonders schonend durchzuführen, kann es vorteilhaft sein, die Säuremenge zu reduzieren, resultierend in einem Gehalt von ca. 0,1 bis 1 Vol-%.

Geeignete Säuren für die Behandlung in Stufe c) des erfindungsgemäßen Verfahrens sind beispielsweise anorganische, bei Raumtemperatur bereits gasförmige, zumindest aber bei der Behandlungstemperatur verdampfbare Säuren. Beispiele sind Halogenwasserstoffsäuren und Salpetersäure. Geeignete organische Säuren sind Ameisensäure, Essigsäure, oder Trifluoressigsäure. Weiterhin als Säure geeignet sind BF₃ oder dessen Addukte an organische Ether.

Wird für die vorgenannten Säuren ein übliches Trägergas (Inertgas z.B. Stickstoff) verwendet, so wird dies im Allgemeinen vorher durch die Säure geleitet und mit dieser beladen. Das so beladene Trägergas wird dann auf die Behandlungstemperatur gebracht, die zweckmäßigerweise höher als die Beladungstemperatur ist, um eine Kondensation der Säure zu vermeiden. Bevorzugt wird die Säure über eine Dosiereinrichtung dem Trägergas zugemischt und die Mischung soweit erwärmt, dass die Säure nicht mehr kondensieren kann.

Weiterhin geeignete und bevorzugte Säuren für die Behandlung in Stufe c) des erfindungsgemäßen Verfahrens, insbesondere für reaktive und/oder oxidationsempfindliche sinterbare Pulver A, sind solche Säuren, die bei Raumtemperatur fest sind und bei höheren Temperaturen sublimieren oder schmelzen und verdampfen, darunter vorzugsweise solche mit einem Sublimations- oder Schmelzpunkt zwischen 80 und 200°C. Besonders bevorzugt sind Oxalsäure, vorzugsweise wasserfreie Oxalsäure, oder Oxalsäuredihydrat. Es wird vorzugsweise eine Lösung von wasserfreier Oxalsäure in Ameisensäure, Essigsäure oder deren Gemischen verwendet.

Weiterhin eignet sich Glyoxalsäure. Außerdem kommen Benzolsulfonsäure, Naphthalinsulfonsäuren und Maleinsäure oder deren Mischungen in Betracht. Diese können sowohl für sich allein oder auch zusammen mit einem Trägergas wie Luft, Stickstoff oder einem Edelgas bei der Entbinderung eingesetzt werden.

Bei der zuletzt genannten Ausführungsform gelangen die verwendeten Säuren im allgemeinen bei der Entbinderungstemperatur zunächst in die Gasphase, wirken von hier aus auf das verbliebene Bindemittel ein und desublimieren oder erstarren nach Abkühlung an den Wandungen der Entbinderungsvorrichtung. In einem anschließenden Entbinderungsvorgang gelangen sie wieder in die Gasphase, d.h. die Säure verlässt die Vorrichtung praktisch nicht.

Zur Erleichterung der Dosierung kann es zweckmäßig sein, die oben genannten Säuren, die bei Raumtemperatur fest sind und bei höheren Temperaturen sublimieren oder schmelzen und verdampfen, als Lösung in polaren Lösungsmitteln, vorzugsweise mit Siedepunkten unter 200°C, einzusetzen. Als solche kommen vor allem Aceton, Dioxan, Ethanol und Acetonitril in Betracht, insbesondere aber organische Säuren wie Ameisensäure und/oder Essigsäure.

Die Säurebehandlung in Schritt c) des erfindungsgemäßen Verfahrens erfolgt bei der Variante mit Säuren, die bei Raumtemperatur fest sind und bei höheren Temperaturen sublimieren oder schmelzen und verdampfen, vorzugsweise bei Temperaturen im Bereich von 100 bis 160°C.

Die Säurebehandlung in Schritt c) des erfindungsgemäßen Verfahrens wird solange durchgeführt, bis der Restbinderanteil in dem Formteil weniger als 0,5 Gew.-%, bevorzugt weniger als 0,3 Gew.-%, ganz besonders bevorzugt weniger als 0,2 Gew.-% beträgt.

Die Säurebehandlung in Schritt c) des erfindungsgemäßen Verfahrens wird oftmals auch als katalytische Entbinderung bezeichnet und kann ebenfalls in handelsüblichen Anlagen ausgeführt werden, die nach den Grundlagen wie in EP-A 0 413 231 beschrieben funktionieren.

Das so nach dem erfindungsgemäßen Verfahren vom Bindemittel befreite Produkt kann in üblicher Weise durch Sintern in den gewünschten Formkörper, insbesondere metallischen oder keramischen Formkörper, überführt werden. Das Sintern kann gegebenenfalls mit einer beschleunigten Aufheizrate von 5 bis 10°C / min im Temperaturbereich von 200 bis 600°C. erfolgen.

Durch das erfindungsgemäße Verfahren können auch Grünteile von reaktiven metallischen oder keramischen Pulvern nahezu rückstandsfrei entbindert werden, wodurch die durch das erfindungsgemäße Verfahren erhaltenen Formkörper bessere Werkstoffeigenschaften aufweisen. Das erfindungsgemäße Verfahren ermöglicht darüber hinaus verkürzte Zykluszeiten des Sinterofens und reduziert dessen Wartungsbedarf.

Die Erfindung wird nachstehend anhand von Beispielen näher erläutert:

In den nachfolgenden Beispielen wurden Versuchsmassen in einem Konusmischer homogenisiert und in einem auf 190°C beheizten Laborextruder homogenisiert und granuliert.

### Beispiel 1

Die Formmasse 1 wies die folgende Zusammensetzung auf:
- 56,75 Vol-% einer Mischung aus 98 Gew-% Carbonyleisenpulver und 2 Gew-% Carbonylnickelpulver
- 43,25 Vol-% Binder, enthaltend
   + 90 Gew-% Polyoxymethylen mit 2 mol-% 1,3-Dioxepan
   + 10 Gew-% Polyethylenoxid mit einer Molmasse 2000, endgruppenverschlossen durch Methylierung

### Beispiel 2

Die Formmasse 2 wies die folgende Zusammensetzung auf:
- 56,75 Vol-% einer Mischung aus 98 Gew-% Carbonyleisenpulver und 2 Gew-% Carbonylnickelpulver
- 43,25 Vol-% Binder, enthaltend
   + 80 Gew-% Polyoxymethylen mit 2 mol-% 1,3-Dioxepan
   + ..20 Gew-% Polyethylenoxid mit einer Molmasse 2000, endgruppenverschlossen durch Methylierung

### Beispiel 3

Die Formmasse 3 wies die folgende Zusammensetzung auf:
- 56,75 Vol-% einer Mischung aus 98 Gew-% Carbonyleisenpulver und 2 Gew-% Carbonylnickelpulver
- 43,25 Vol-% Binder, enthaltend
   + 50 Gew-% Polyoxymethylen mit 2 mol-% 1,3-Dioxepan
   + 50 Gew-% Polyethylenoxid mit einer Molmasse 2000, endgruppenverschlossen durch Methylierung

### Beispiel 4

Die Formmasse wies die folgende Zusammensetzung auf:
- 56,75 Vol-% einer Mischung aus 98 Gew-% Carbonyleisenpulver und 2 Gew-% Carbonylnickelpulver
- 43,25 Vol-% Binder, enthaltend
   + 90 Gew-% Polyoxymethylen mit 2 mol-% 1,3-Dioxepan
   + 10 Gew-% Polytetrahydrofuran mit einer Molmasse 2000

### Beispiel 5

Die Formmasse 5 wies die folgende Zusammensetzung auf:
- 64 Vol-% eines Metallpulvers der Zusammensetzung 17-4PH (DIN 1.4542) mit einer mittleren Korngröße von 7 µm
- 36 Vol-% Binder, enthaltend
   + 80 Gew-% Polyoxymethylen mit 2 mol-% 1,3-Dioxepan
   + 20 Gew-% Polyethylenoxid mit einer Molmasse 2000, endgruppenverschlossen durch Methylierung

### Beispiel 6

Die Formmasse 6 wies die folgende Zusammensetzung auf:
- 47 Vol-% eines Keramikpulvers der Zusammensetzung ZrO₂ - 5 Gew-% Y₂O₃ mit einer mittleren Korngröße von 0,3 µm
- 51 Vol-% Binder, enthaltend
   + 80 Gew-% Polyoxymethylen mit 2 mol-% 1,3-Dioxepan
   + 20 Gew-% Poly-1,3-Dioxepan mit einer Molmasse 34.000
- 2 Vol-% Dispergator, ein ethoxylierter Fettalkohol mit der Molmasse 500

### Spritzgießversuche an realen Bauteilen

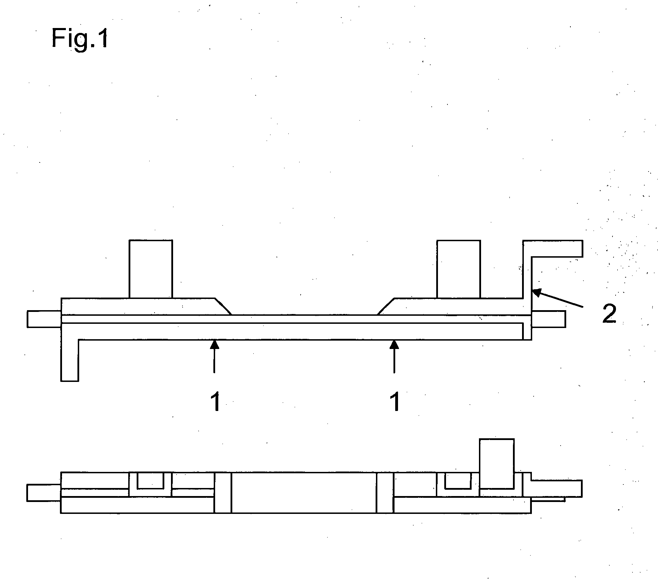

Die Untersuchung der generellen Eignung der Formmassen für die Praxis wurde mit einem komplexen und schweren Bauteil (Figur 1) ausgeführt, ein mit zwei Bandangüssen an den Positionen 1 angespritztes Scharnier komplexer Geometrie.

Figur 1 oben zeigt eine Ansicht des Bauteils, Figur 1 unten zeigt eine Aufsicht des Bauteils, wobei die Position 1 den Anguss und die Position 2 die Bruchstelle durch Eigengewicht kennzeichnet.

Die Länge des Bauteils betrug 100 mm, das Gewicht des erhaltenen Sinterteils betrug bei den Metallpulverbeispielen 1 bis 5 ca. 34 g; bei Beispiel 6 ca. 26 g.

Damit ist sichergestellt, dass die Ergebnisse der Versuche auch praxisrelevant sind, denn das Eigengewicht dieses Bauteils stellt überdurchschnittlich hohe Forderungen an die Festigkeit nach der Entbinderung.

### Untersuchung der Verarbeitung auf der Spritzgießmaschine

Die Formmassen 1 bis 5 wurden im Zylinder der Spritzgießmaschine bei 190°C aufgeschmolzen, die Spritzgießform war auf 135°C temperiert. Die Keramikformmasse 6 wurde bei 175°C Zylindertemperatur verarbeitet. Generell war der benötigte Einspritzdruck ca. 1900 bar, lediglich Formmasse 3 mit einem hohen PEO-Gehalt und der niedrigeren Molmasse 2000 konnte mit 1100 bar verarbeitet werden.

Die Formmassen 1 bis 6 unterschieden sich in der benötigten Kühlzeit vor der Entformung. Die Formmassen mit einem höheren Anteil an Zweitbinder (20 % und höher) waren etwas weicher und benötigten eine längere Kühlzeit, um das Grünteil intakt entformen zu können.

Die Verarbeitung aller Formmassen 1 bis 6 war ohne besondere Probleme möglich.

### Untersuchung des Entbinderns und des Sinterns

Die aus den Formmassen 1 bis 6 hergestellten Grünteile wurden in einem Lösemittel vorbehandelt, danach katalytisch entbindert und gesintert.

Für die Lösemittelentbinderung wurden die Grünteile in einem Dreihalskolben mit einem siedenden Lösemittel unter Rückfluss und Rühren behandelt. Grünteile der Beispiele 1 bis 4 wurden nach 7 h, 14 h, 21 h und 28 h Lagerung im Lösemittel entnommen, getrocknet und gewogen. Die Grünteile aus Beispiel 5a und 6 wurden nur am Ende der Lagerung (28 h) zurückgewogen.

Tabelle 1 zeigt die Ergebnisse bezüglich Gewichtsverlust als Prozent der Theorie für die Lösermittel-Primärentbinderung mit Aceton:

**Tabelle 1**

| Beispiel | Zusammensetzung Bindemittel (Gew.-%) | | Gewichtsverlust des Formteils (% der Th.) | | | |
|---|---|---|---|---|---|---|
| | | Behandlung mit Aceton in Stunden | 7 h | 14 h | 21 h | 28 h |
| 1 | POM - 10 % PEO 2000 | | 59 | 77 | 84 | 89 |
| 2 | POM - 20 % PEO 2000 | | 70 | 85 | 92 | 95 |
| 3 | POM - 50 % PEO 2000 | | 71 | 85 | 94 | 97 |
| 4 | POM - 10 % PTHF 2000 | | 69 | 81 | 85 | 88 |
| 5a | POM - 20% PEO 2000 | | | | | 90 |
| 6 | POM - 20 % PDP 34.000 | | | | | 84 |

Man erkennt, dass bereits bei einem Bindemittelgehalt von 20 Gew.-% der Komponente B₂) in der Formmasse die maximale Entbinderungsgeschwindigkeit im siedenden Lösemittel erreicht wird; Beispiel 3 mit dem höchsten PEO-Gehalt in der Formmasse ist nicht mehr wesentlich schneller hinsichtlich des Lösungsvorgangs. Selbst bei 10 Gew.-% der Komponente B₂) in der Formmasse (Beispiel 1) ist die Entfernung noch erstaunlich zügig.

Bei der Formmasse von Beispiel 6 wurde der prozentuale Gewichtsverlust auf die Gesamtmenge Poly-1,3-Dioxepan plus Dispergator bezogen.

Weitere Grünteile aus der Formmasse 5 wurden gemäß Beispiel 5b in Wasser als Lösemittel entbindert (siehe Tabelle 2):

Tabelle 2 zeigt, dass die Entfernung des im Formteil enthaltenenen PEO-Binderanteils auch in siedendem Wasser gelingt, wenn auch langsamer als in Aceton.

**Tabelle 2**

| Beispiel | Zusammensetzung Bindemittel (Gew.-%) | | Gewichtsverlust des Formteils (% der Th.) | | | |
|---|---|---|---|---|---|---|
| | | Behandlung mit Wasser in Stunden | 7h | 14 h | 21 h | 28 h |
| 5b | POM - 20% PEO 2000 | | 54 | 67 | 72 | 75 |

Die nach der Primärentbinderung mit einem Lösemittel erfolgende katalytische Säureentbinderung wurde mit den Bauteilen der Beispiele 1 bis 6 in einem 50-L-Laborofen bei 110 °C ausgeführt. Es wurde zum Inertisieren mit 500 L/h Stickstoff gespült, nach 1 h wurden in den weiterhin mit 500 L/h Stickstoff gespülten Ofen 30 ml/h HNO₃ hineindosiert und verdampft. Nach 6 h Entbinderzeit war von allen Bauteilen der Polyacetal-Anteil zu mindestens 98 % entfernt.

Die Pulverformteile der Beispiele 5a und 5b waren nicht ganz perfekt, der Hebel rechts (Position 2 in Figur 1) auf der Ansicht der Figur war abgebrochen. Durch Reduzierung der Säuredosierung auf 15 ml/h bei 8 h Säurebehandlungszeit zur langsameren, noch schonenderen Entbinderung wurden intakte, vollständig entbinderte Formteile erhalten.

Die nach der zweistufigen Entbinderung erhaltenen Pulverformteile der Beispiele 1 bis 4 wurden in 30-L-Sinterofen mit Molybdänverkleidung und Molybdänsinterelementen unter Stickstoff gesintert.

Die Sinterkurve war wie folgt:
- Raumtemperatur bis 600°C mit 3°C / Min
- Haltezeit bei 600°C: 1 h
- 600°C bis 1280°C mit 5°C / Min.
- Haltezeit bei 1280°C: 1 h
- Abkühlen mit 5°C / Min bis 1000°C
- Ofen aus, natürliche Abkühlung.

Mit diesem Standard-Sinterprogramm für Braunteile mit Restbinder war es für alle Formmassen gemäß den Beispielen 1 bis 4 möglich, eine gute Sinterdichte von zumindest 7,59 g/cm³ zu erreichen.

Danach wurden Sinterversuche mit den höheren Aufheizgeschwindigkeiten 5 und 10°C / min und ohne Haltestufe bei 600°C ausgeführt. Auch unter diesen extremen Bedingungen war es möglich aus den Braunteilen der Beispiele 1 bis 4 einwandfreie Sinterteile mit Sinterdichten von zumindest 7,59 g/cm³ aus dem restbinderfreien Pulverformteil zu erhalten.

Die nach der zweistufigen, verlangsamten Entbinderung erhaltenen Pulverformteile aus der Formmasse 5 gemäß den Beispielen 5a und 5b (Beispiel 5a Aceton, Beispiel 5b Wasser) wurden in einem 30-L-Sinterofen mit Molybdänverkleidung und Molybdänsinterelementen unter Wasserstoff gesintert. Die Sinterkurve war wie folgt:
- Raumtemperatur bis 1280°C mit 5°C / Min
- Haltezeit bei 1380°C: 1 h
- Abkühlen mit 5°C / Min bis 1000°C
- Ofen aus, natürliche Abkühlung

Auch bei den Formteilen gemäß Beispiel 5 konnte problemlos mit dem schnelleren Sinterprogramm gearbeitet werden. Die erhaltenen Sinterteile erreichten eine gute Sinterdichte von 7,68 g/cm³.

Die nach der zweistufigen Entbinderung erhaltenen Pulverformteile des Beispiels 6 wurden in einem handelsüblichen Keramiksinterofen in Luft gesintert. Die Sinterkurve war wie folgt und ebenfalls ohne Haltestufen:
- Raumtemperatur bis 1500°C mit 5°C / Min
- Haltezeit bei 1500°C: 1 h
- Abkühlen mit 5°C / Min bis 1000°C
- Ofen aus, natürliche Abkühlung

Die erhaltenen Sinterteile waren völlig intakt, fehlerfrei und wiesen eine gute Sinterdichte von 6,05 g/cm3 auf.

Die Beispiele 1 bis 6 zeigen, dass es möglich ist, intakte Sinterteile ohne das Vorhandensein eines Restbinders herzustellen. Durch den nun möglichen Verzicht auf die sonst üblichen, langsamen Ausbrennprogramme ist ein wesentlich kürzerer Sinterzyklus zu erreichen.

In den folgenden Beispielen 7 und 8 wird eine insbesondere für reaktive Pulver geeignete Verfahrensvariante beschrieben.

### Vergleichsbeispiel 1

Die Formmasse 7 wies die folgende Zusammensetzung auf:
- 54 Vol-% einer Mischung aus 97 Gew-% Aluminiumpulver und 3 Gew-% Magnesiumpulver, beide mit einer mittleren Korngröße von 18 µm
- 46 Vol-% Binder, enthaltend
   + 87 Gew-% Polyoxymethylen mit 2 mol-% 1,3-Dioxepan
   + 13 Gew-% eines ethoxylierten C₁₃-C₁₅-Oxoalkohol mit 7 Ethylenoxid-Einheiten

Aus dieser Formmasse wurden auf einer Spritzgießmaschine Zugstäbe gemäß ISO 2740 hergestellt.

Die Zugstäbe wurden konventionell katalytisch in einem 50-I-Ofen mit 4 Vol-% HNO₃ in 500 l/h Stickstoff (technisch rein) bei 140 °C während 10 h entbindert. Nach der Entbinderung zeigten sich kleine, perlenähnliche Auswüchse auf der Oberfläche der entbinderten Zugstäbe, die sich vermutlich durch Reaktion des Magnesiums mit HNO₃ gebildet hatten.

### Beispiel 7

Die gleichen Zugstäbe aus der Formmasse 7 wurden 24 h in siedendem Aceton unter Rückfluss vorentbindert zum Herauslösen des ethoxylierten Fettalkohols. Nach 24 h waren 92 % des ethoxylierten Fettalkohols entfernt.

Danach erfolgte eine katalytische Entbinderung unter Einsatz von 80 g wasserfreier Oxalsäure auf einer Sublimierschale bei 140 °C während 24 h. Nach dieser zweistufigen Entbinderung zeigten sich keine Auswüchse auf der Oberfläche der entbinderten Zugstäbe.

Anschließend erfolgte das Sintern der Braunteile aus der Formmasse 7 mit folgendem Programm:
- Raumtemperatur bis 420°C mit 3°C / Min in Sauerstoff
- Haltezeit bei 420°C: 1 h, danach Wechsel auf Stickstoff (Taupunkt -50°C).
- 420 °C bis 665°C mit 3°C / Min.
- Haltezeit bei 665°C: 1 h
- Abkühlen mit 5°C / Min bis 400°C
- Ofen aus, natürliche Abkühlung.

Man erhielt die folgenden Analysenergebnisse für das Sinterteil (Tabelle 3):

**Tabelle 3**

| Sinterteil | Vergleichsbeispiel 1 | Beispiel 7 |
|---|---|---|
| Sinterdichte | 2,36 g/cm³ | 2,42 g/cm³ |
| Kohlenstoffgehalt | 0,045 % | 0,039 % |
| Sauerstoffgehalt | 0,30% | 0,24% |

Die Sinterteile des Vergleichsbeispiels 1 hatten als Folge der Auswüchse eine deutlich rauere Oberfläche als die Sinterteile gemäß Beispiel 7. Darüber hinaus weisen die gemäß Beispiel 7 erhaltenen Sinterteile im Vergleich zu den Sinterteilen aus Vergleichsbeispiel 1 einen reduzierten Kohlenstoff- und Sauerstoffgehalt sowie eine höhere Sinterdichte auf. Dadurch lassen sich aus den gemäß Beispiel 7 hergestellten Sinterteilen weniger spröde Werkstoffe herstellen, die sich leichter bearbeiten lassen.

### Vergleichsbeispiel 2

Die Formmasse 8 wies die folgende Zusammensetzung auf:
- 64 Vol% eines Titanpulvers Grade 2 (DIN 17862 - 3.7035) mit einer mittleren Korngröße von 25 µm
- 36 Vol-% Binder, enthaltend
   + 90 Gew-% Polyoxymethylen mit 2 mol% 1,3-Dioxepan
   + 10 Gew-% Poly-1,3-Dioxolan mit einer Molmasse 35.000

Aus dieser Formmasse wurden auf einer Spritzgiessmaschine Zugstäbe gemäß ISO 2740 hergestellt.

Die Zugstäbe wurden konventionell katalytisch in einem 50-I-Ofen mit 4 Vol-% HNO₃ in 500 l/h Stickstoff (technisch rein) bei 140°C während 6 h entbindert.

### Beispiel 8

Die gleichen Zugstäbe aus der Formmasse 8 wurden 24 h in siedendem Aceton unter Rückfluss vorentbindert. Nach 24 h waren 84 % des Poly-1,3-Dioxolans entfernt. Danach wurden die Zugstäbe, wie in Beispiel 7 beschrieben, mit Oxalsäure katalytisch entbindert und mit folgendem Programm gesintert unter Argon der Qualität 5.0:
- Raumtemperatur bis 600°C mit 3°C / Min
- Haltezeit bei 600°C: 1 h
- 600°C bis 1200°C mit 5°C / Min
- Haltezeit bei 1200°C: 1 h
- Abkühlen mit 5°C / Min bis 1000°C
- Ofen aus, natürliche Abkühlung

Man erhielt die folgenden Analysenergebnisse für das Sinterteil (Tabelle 4):

**Tabelle 4:**

| Sinterteil | Vergleichsbeispiel 2 | Beispiel 8 | DIN 17862 3.7065 | DIN 17862 3.7035 |
|---|---|---|---|---|
| Sinterdichte | 4,29 g/cm³ | 4,33 g/cm³ | - | - |
| Stickstoffgehalt | 0,035 % | 0,037 % | 0,07 % max. | 0,05 % max. |
| Kohlenstoffgehalt | 0,15% | 0,06% | 0,10 % max. | 0,06 % max. |
| Sauerstoffgehalt | 0,25 % | 0,20 % | 0,30 % max. | 0,20 % max. |

### Fazit:

Die erfindungsgemäß nach Beispiel 8 erhaltenen Sinterteile weisen im Vergleich zu den Sinterteilen aus Vergleichsbeispiel 2 einen reduzierten Kohlenstoff- und Sauerstoffgehalt sowie eine höhere Sinterdichte auf. Das gemäß Vergleichsbeispiel 2 erhaltene Sinterteil entspricht in den Elementen C und O nur der Norm DIN 3.7065, während das erfindungsgemäß nach Beispiel 8 erhaltene Sinterteil immer noch der viel strengeren Norm DIN 3.7035 genügt.

Dadurch lassen sich aus den gemäß Beispiel 8 hergestellten Sinterteilen weniger spröde Werkstoffe herstellen, die sich leichter bearbeiten lassen.

## Patentansprüche

1. Verfahren zur Herstellung eines metallischen oder keramischen Formkörpers aus einer thermoplastischen Masse, enthaltend
A) 40 bis 65 Vol.-%, mindestens eines anorganischen sinterbaren Pulvers A
B) 35 bis 60 Vol.-% einer Mischung aus
B₁) 50 bis 95 Gew.-% eines oder mehrerer Polyoxymethylenhomo- oder -copolymerisate;
B₂) 5 bis 50 Gew-% eines in B₁) homogen gelösten oder mit einer mittleren Teilchengröße von weniger als 1 µm in B₁) dispergierten Polymerisats,
als Bindemittel, und
C) 0 bis 5 Vol.-% eines Dispergierhilfsmittels,
wobei die Summe der Komponenten A), B) und C) 100 Vol.-% ergibt,
durch Spritzgießen oder Extrusion zu einem Grünteil, Entfernen des Bindemittels und Sintern, **dadurch gekennzeichnet, dass** zum Entfernen des Bindemittels
a) das Formteil mit einem Lösungsmittel behandelt wird, welches die Bindemittelkomponente B₂) aus dem Formteil extrahiert und in welchem die Bindemittelkomponente B₁) unlöslich ist,
b) dann das Lösungsmittel durch Trocknen aus dem Formteil entfernt wird, und
c) anschließend das Formteil in einer säurehaltigen Atmosphäre behandelt wird, welches die Bindemittelkomponente B1 aus dem Formkörper entfernt, und wobei die Säurebehandlung solange durchgeführt wird bis der Restbinderanteil in dem Formteil weniger als 0,5 Gew.-% beträgt.

2. Verfahren gemäß Anspruch 1, **dadurch gekennzeichnet, dass** in Schritt c) Säuren, die bei Raumtemperatur fest sind und bei höheren Temperaturen sublimieren öder schmelzen und verdampfen, verwendet werden.

3. Verfahren gemäß Anspruch 1 oder 2, **dadurch gekennzeichnet, dass** in Schritt c) wasserfreie Oxalsäure verwendet wird.

4. Verfahren gemäß einem der Ansprüche 1 bis 3, **dadurch gekennzeichnet, dass** Schritt a) bei einer Temperatur oberhalb RT bis zur Siedetemperatur des Lösemittels ausgeführt wird.

5. Verfahren gemäß einem der Ansprüche 1 bis 4, **dadurch gekennzeichnet, dass** als anorganisches sinterbares Pulver A) ein reaktives und/oder oxidationsempfindliches Pulver eingesetzt wird.

6. Verfahren gemäß einem der Ansprüche 1 bis 5, **dadurch gekennzeichnet, dass** der Anteil der Bindemittelkomponente B₂) 10 bis 30 Gew-% beträgt.

7. Verfahren gemäß einem der Ansprüche 1 bis 6, **dadurch gekennzeichnet, dass** die Bindemittelkomponente B₂) ausgewählt ist aus der Gruppe enthaltend: Polyolefine, aliphatische Polyurethane, aliphatische unvernetzte Polyepoxide, Polyether, aliphatische Polyamide und Polyacrylate sowie deren Mischungen.

8. Verfahren gemäß einem der Ansprüche 1 bis 7, **dadurch gekennzeichnet, dass** die Bindemittelkomponente B₂) ein Polyether ausgewählt aus der Gruppe enthaltend Polyethylenoxid, Polypropylenoxid, Poly-1,3-Dioxepan, Poly-1,3-Dioxan, Poly-1,3-Dioxolan, Polytetrahydrofuran (Poly(tetramethylen)oxid) und deren Mischungen ist.

## Claims

1. A process for producing a metallic or ceramic shaped body from a thermoplastic material comprising
A) 40 to 65% by volume of at least one inorganic sinterable powder A
B) 35 to 60% by volume of a mixture of
B₁) 50 to 95% by weight of one or more polyoxymethylene homo- or copolymers;
B₂) 5 to 50% by weight of a polymer homogeneously dissolved in B₁) or dispersed in B₁) with a mean particle size of less than 1 µm,
as a binder, and
C) 0 to 5% by volume of a dispersing aid,
where the sum of components A), B) and C) adds up to 100% by volume,
by injection molding or extrusion to give a green body, removing the binder and sintering, which comprises removing the binder by
a) treating the molding with a solvent which extracts the binder component B₂) from the molding and in which the binder component B₁) is insoluble,
b) then removing the solvent from the molding by drying, and
c) then treating the molding in an acid-containing atmosphere which removes the binder component B₁ from the molding, and where the acid treatment is performed until the residual binder content in the molding is less than 0.5% by weight.

2. The process according to claim 1, wherein acids which are solid at room temperature and sublime or melt and evaporate at higher temperatures are used in step c).

3. The process according to claim 1 or 2, wherein an anhydrous oxalic acid is used in step c).

4. The process according to any of claims 1 to 3, wherein step a) is conducted at a temperature above RT up to the boiling temperature of the solvent.

5. The process according to any of claims 1 to 4, wherein the inorganic sinterable powder A) used is a reactive and/or oxidation-sensitive powder.

6. The process according to any of claims 1 to 5, wherein the proportion of the binder component B₂) is 10 to 30% by weight.

7. The process according to any of claims 1 to 6, wherein the binder component B₂) is selected from the group comprising: polyolefins, aliphatic polyurethanes, aliphatic uncrosslinked polyepoxides, polyethers, aliphatic polyamides and polyacrylates, and mixtures thereof.

8. The process according to any of claims 1 to 7, wherein the binder component B₂) is a polyether selected from the group comprising polyethylene oxide, polypropylene oxide, poly-1,3-dioxepane, poly-1,3-dioxane, poly-1,3-dioxolane, polytetrahydrofuran (poly(tetramethylene) oxide) and mixtures thereof.

## Revendications

1. Procédé de fabrication d'un corps moulé métallique ou céramique à partir d'une matière thermoplastique, contenant
A) 40 à 65 % en volume d'au moins une poudre frittable inorganique A,
B) 35 à 60 % en volume d'un mélange de
B₁) 50 à 95 % en poids d'un ou de plusieurs homo-ou copolymères de polyoxyméthylène ;
B₂) 5 à 50 % en poids d'un polymère dissous de manière homogène dans B₁) ou dispersé dans B₁) avec une taille de particule moyenne inférieure à 1 µm,
en tant que liant, et
C) 0 à 5 % en volume d'un adjuvant de dispersion,
la somme des composants A), B) et C) étant de 100 % en volume,
par moulage par injection ou extrusion en une pièce verte, élimination du liant et frittage, **caractérisé en ce que**, pour l'élimination du liant,
a) la pièce moulée est traitée avec un solvant qui extrait le composant liant B₂) de la pièce moulée et dans lequel le composant liant B₁) est insoluble, puis
b) le solvant est éliminé par séchage de la pièce moulée, puis
c) la pièce moulée est traitée dans une atmosphère contenant un acide, qui élimine le composant liant B₁) du corps moulé, le traitement acide étant réalisé jusqu'à ce que la proportion résiduelle de liant dans la pièce moulée soit inférieure à 0,5 % en poids.

2. Procédé selon la revendication 1, **caractérisé en ce qu'**à l'étape c), des acides qui sont solides à température ambiante et qui sont sublimés ou fondus et évaporés à des températures plus élevées sont utilisés.

3. Procédé selon la revendication 1 ou 2, **caractérisé en ce qu'**à l'étape c), de l'acide oxalique anhydre est utilisé.

4. Procédé selon l'une quelconque des revendications 1 à 3, **caractérisé en ce que** l'étape a) est réalisée à une température allant de plus de TA jusqu'à la température d'ébullition du solvant.

5. Procédé selon l'une quelconque des revendications 1 à 4, **caractérisé en ce qu'**une poudre réactive et/ou sensible à l'oxydation est utilisée en tant que poudre frittable inorganique A).

6. Procédé selon l'une quelconque des revendications 1 à 5, **caractérisé en ce que** la proportion du composant liant B₂) est de 10 à 30 % en poids.

7. Procédé selon l'une quelconque des revendications 1 à 6, **caractérisé en ce que** le composant liant B₂) est choisi dans le groupe contenant : les polyoléfines, les polyuréthanes aliphatiques, les polyépoxydes aliphatiques non réticulés, les polyéthers, les polyamides aliphatiques et les polyacrylates, ainsi que leurs mélanges.

8. Procédé selon l'une quelconque des revendications 1 à 7, **caractérisé en ce que** le composant liant B₂) est un polyéther choisi dans le groupe contenant l'oxyde de polyéthylène, l'oxyde de polypropylène, le poly-1,3-dioxépane, le poly-1,3-dioxane, le poly-1,3-dioxolane, le polytétrahydrofurane (oxyde de polytétraméthylène) et leurs mélanges.
